# EUROPEAN PATENT SPECIFICATION

(11) **EP 3 695 154 B1**
(45) Date of publication and mention of the grant of the patent: **02.11.2022**
(21) Application number: 17838082.0
(22) Date of filing: 09.10.2017
(51) Int. Cl.: F16L 25/00, F16L 37/113, F16L 27/12, A01C 15/02, A01M 7/00, B05B 7/14, F16L 33/04, F16L 21/06, B05B 7/24

(54) **DIRECTABLE PIVOTING HOSE FOR PORTABLE ATOMIZER AND/OR BLOWER MACHINERY**
AUSRICHTBARER SCHWENKBARER SCHLAUCH FÜR TRAGBARE ZERSTÄUBER- UND/ODER GEBLÄSEMASCHINEN
TUYAU FLEXIBLE ORIENTABLE ET PIVOTANT POUR ÉQUIPEMENT PORTABLE ATOMISEUR ET/OU SOUFFLEUR

(43) Date of publication of application: 19.08.2020
(73) Proprietor: Cifarelli S.p.A., 27058 Voghera (Pavia) (IT)
(72) Inventor: CIFARELLI, Roberto, 27058 Voghera (Pavia) (IT)
(74) Representative: Tarabbia, Luigi
(86) International application number: PCT/IT2017/000221
(87) International publication number: WO 2019/073493

(56) References cited:
- EP-A1- 2 957 829
- EP-A1- 3 045 796
- EP-A1- 3 086 012
- DE-U1-202009 007 433
- JP-A- 2000 301 033
- US-A1- 2002 067 995

## Description

The present invention relates to a telescopic and combinable hose for portable blower or atomizer machinery or, more generally, to "back-pack" or "shoulder-strap" portable agricultural machinery.

As is well known, the use of so-called blowers (or sprayers/atomizers of various substances in equally varying states of aggregation) is widely spread in modern agricultural and forestry practices, ranging from harvesting fruit or leaves to the spreading of fertilizers or anti-weed agents and so on. In order to conveniently provide the operators of such portable machines with the necessary freedom of movement and pointing, these devices generally include a motor assembly and a tank mounted on a main frame (which is designed to allow the device to be worn by shoulder straps and/or braces): in addition to these two components there is a directable pivoting hose, equipped with appropriate ergonomic and/or command interfaces, which is taken up by the operator and directed or pointed where necessary. Generally, as described in the documents EP2957829, US2002/067995, EP3045796, EP3086012, JP2000301033 and DE202009007433, the directable pivoting hoses have fixed lengths and limited movement capacities, having to maintain an adequate rigidity to resist crushing and having to withstand in any case the static and dynamic pressure generated by the motor assembly and the related flow of (fluid and/or gaseous and/or solid) material flowing inside the hose itself. The aforementioned structural and movement limits of known hoses are therefore limiting not only in terms of inconvenience for the operator, but also in terms of operational flexibility (for example, forcing the replacement of the whole hose if work of different nature or work requiring a remarkable variation of the overall length of the hose itself is to be performed).

It is thus evident that a strong need in the field of blower/atomizer portable machinery consists in finding solutions allowing to reduce or eliminate the operating limits just listed and at the same time improving the overall functionality, not only of directable pivoting hoses, but also of the whole atomizer/blower device.

In this context, the technical task underlying the present invention is to propose a directable pivoting hose for atomizers or blowers that overcomes the aforementioned operating limits and, in particular, it is an object of the present invention to provide a directable pivoting hose which has very high adaptability features in different operating contexts, also ensuring an optimal "mechanical" resistance or consistency level to withstand both directing and pivoting efforts and flow pressures generated by the motors of the blowers/atomizers.

The mentioned technical task and the specified aims are substantially achieved by a directable pivoting hose for atomizers/blowers, according to claim 1.

Further features and advantages of the present invention will become more apparent from the description of an exemplary, but not exclusive, and therefore non-limiting preferred embodiment of a directable pivoting hose for portable atomizers or blowers as illustrated in the appended figures, wherein:

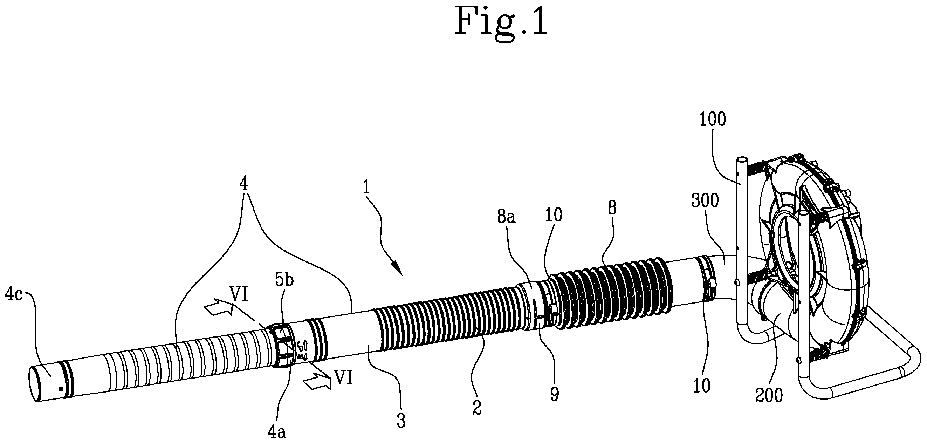

- Figure 1 shows a schematic overall view of a blower or atomizer machinery having the hose according to the invention;

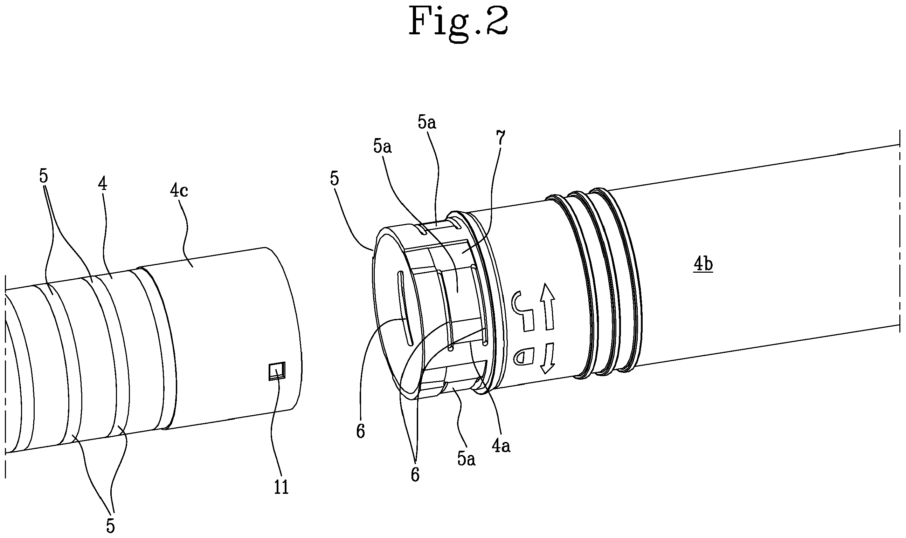

- Figure 2 shows a local enlarged view of two modular segments constituting the hose of Figure 1 in conditions close to the assembly;

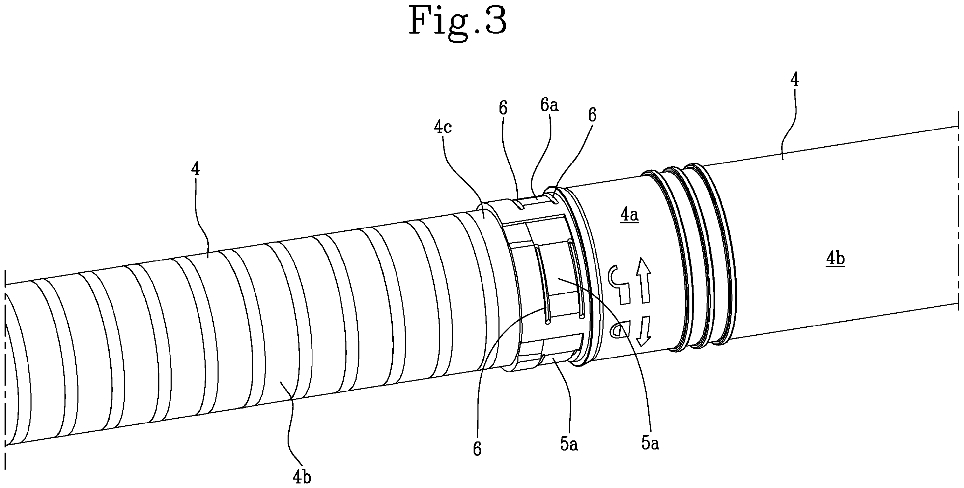

- Figure 3 shows a local enlarged view of two modular segments constituting the hose of Figure 1 in conditions of partial assembly;

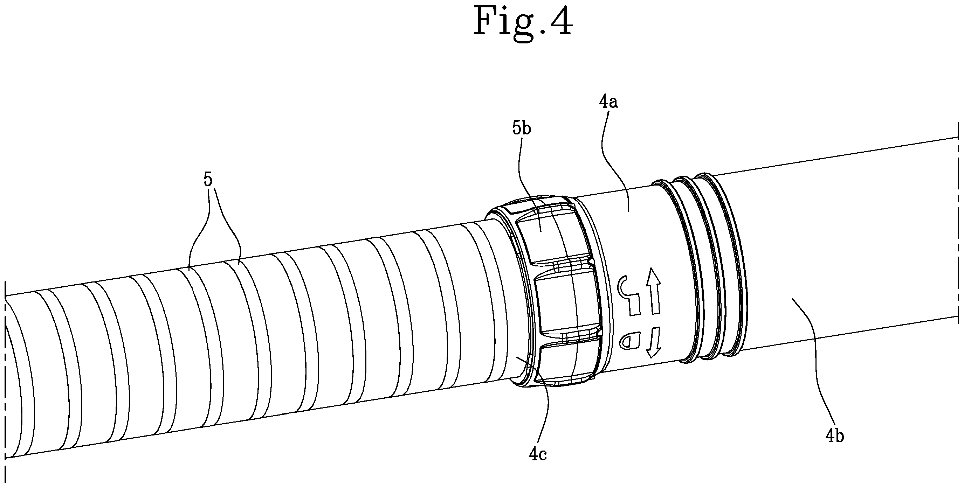

- Figure 4 shows a local enlarged view of two modular segments constituting the hose of Figure 1 under final assembly conditions (i.e. in stable and reversible assembly conditions depending on the intentions of the blower and/or atomizer machinery operator);

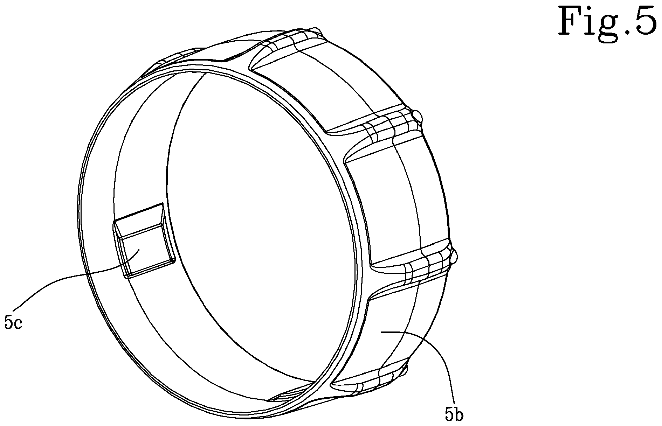

- Figure 5 shows an axonometric view of a functional component realizing the final assembly shown in Figure 4;
- Figure 6 shows a sectional view of a component of the hose along the line VI-VI of Figure 1;

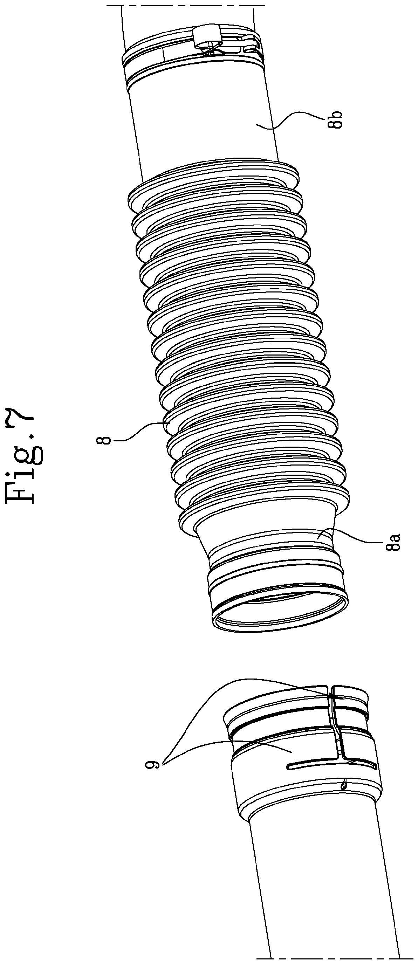

- Figure 7 shows a local enlarged view of a junction segment constituting the hose of Figure 1 in conditions close to the assembly;

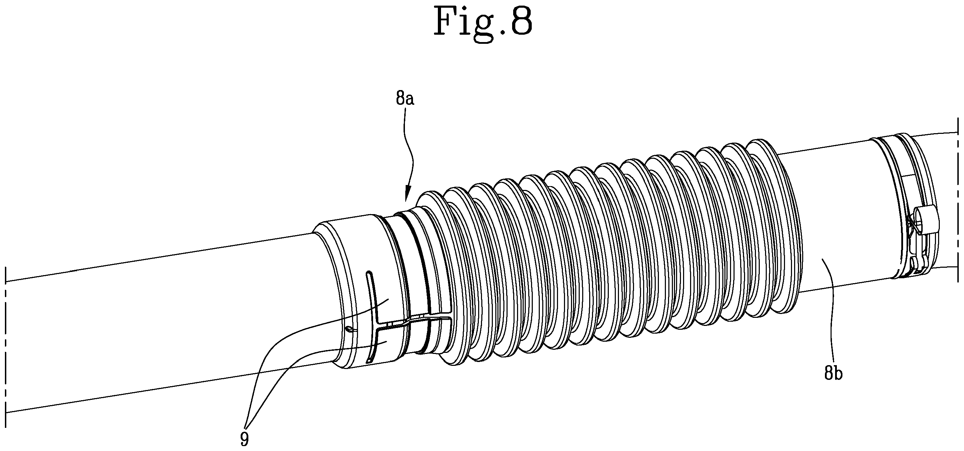

- Figure 8 shows a local enlarged view of the junction segment of Figure 7 in partial assembly conditions;

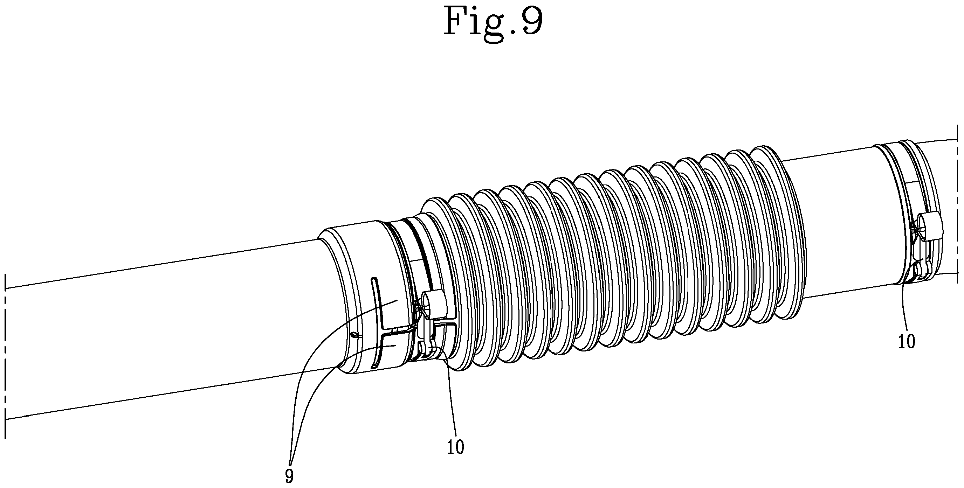

- Figure 9 shows a local enlarged view of the junction segment of Figure 7 under final assembly conditions (i.e. in stable and reversible assembly conditions depending on the intentions of the blower and/or atomizer machinery operator);

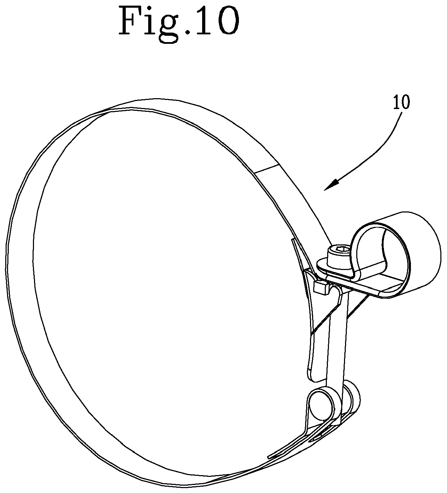

- Figure 10 shows an axonometric view of a functional component realizing the final assembly shown in Figure 9; and
- Figures 11 and 12 show respectively a schematic overall view and a local enlarged view of a blower and/or atomizer machinery having the directable pivoting hose according to the invention and with an additional accessory component mounted on the directable pivoting hose itself.

In the accompanying figures, the directable pivoting hose for portable atomizers or blowers is generally indicated by number 1 and essentially comprises a body 2, whose construction details will be detailed later and which can however consist of a single piece or a combination of more parts according to the current requirements, having a first end suitable to hook a propulsion apparatus (or more generally an injection and flow apparatus for fluid and/or a material typical of blower and/or atomizer machinery) and a second end opposed to the first end along an axis of development 3 of the hose 1 itself (this second end is conveniently suitable to expel the aforesaid fluid and/or material flow).

Structurally, the body (2) comprises, along the axis of development 3, a head portion 4a able to define a first interpenetration seat arranged along the axis of development 3, an elongated portion 4b protruding from the head portion 4a along an ideal axis, for example (but not necessarily) straight and generally contributing to define the axis of development 3 in the assembly condition of the hose 1 and finally a tail portion 4c connected to the elongated portion 4b and opposite to the head portion 4a along the just mentioned ideal axis (such tail portion 4c in turn is suitable to define a second interpenetration seat).

Advantageously, selective locking means 5 are integrally obtained at least in the head portion 4a: such selective locking means 5 are arranged around the axis of development 3 and are reversibly configurable between an unlocked condition (in which they lie substantially undeformed with respect to the head portion 4a and therefore allow approaching or distancing movements of components that can be hooked to the head portion 4c) at least at the first interpenetration seat and between a locked condition (in which, instead, they are deformed so as to bind any hookable components in the first interpenetration seat).

In more detail, in order to be able to select qualitatively and more specifically in order to ensure a well-defined level of stability of the grade/level of interpenetration between adjacent modular segments, the selective locking means 5 comprise a predetermined number of crown segments 5a defined by two slots 6: such slots 6 are integrally obtained in the head portion 4a and/or the tail portion 4c along ideal sectional planes normal to the axis of development 3 and define at least from the geometric point of view two integral connection areas 7, which lie on the head portion 4a (and/or on the tail portion 4c) and are perimetrically alternating with the slots 6 themselves.

The shape and arrangement of the crown segments 5a makes them suitable to take a predetermined projected curvature arrow projected internally to the head portion 4a at the locked condition: note in particular that the presence of the two integral connection areas 7 allows a type of deformation more suitable for the technical purpose of the invention, ensuring the absence of "cantilevered edges" of the deformable portions while ensuring a sufficient degree of mechanical pressure (resulting from the "arrow" elastic deformation of the crown segments 5a) on the part of that possible object which is combinable or assemblable to the hose 1 which receives, by "pressure", the crown segments 5a themselves.

In order to ensure a uniformly distributed mechanical pressure action on the tail portion 4c, the crown segments 5a are radially equally spaced on the head portion 4a, with respect to the axis of development 3 (depending on the current requirements, for example depending on the diameter of the head or tail portion to be interpenetrated, these crown segments may be in a number varying from 3 to 6, preferably 4).

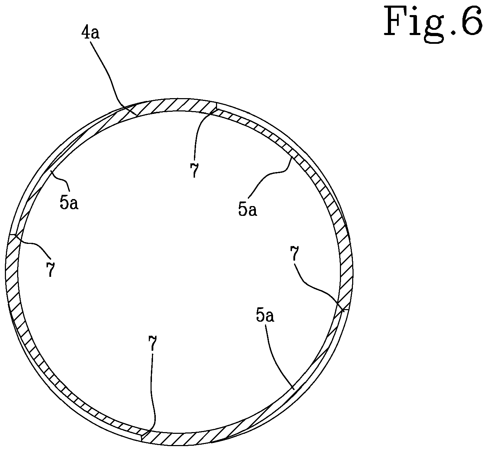

From a geometric point of view, the crown segments 5a have a variable thickness in the radial direction with respect to the axis of development 3 (see Figure 6 in this regard): this thickness is preferably monotonously variable from an integral connection area 7 towards the other integral connection area 7, thus creating a "ramp" profile which, as will be discussed later, will help to determine the most appropriate deformation mode of the crown segments 5a.

Returning to the selective locking means 5, it may be noted that they also comprise at least one bezel 5b circumscribed to the head portion 4a and preferably circumscribed to one or more crown segments 5a at least at a partial interpenetration between two modular segments 4.

From the functional point of view, the bezel 5b is suitable to impose on the crown segments 5a the "curvature arrow" already mentioned above: such function is achieved by means of one or more pushing elements 5c which project towards the crown segments 5a and are reversibly configurable,by means of rotation of the bezel 5b around the head portion 4a, thus making a transition between the unlocked condition, in which they do not act by deforming the crown segments 5a, and between the locked condition in which they act by deformation of the crown segments 5a.

Always in order to achieve the above-introduced function, the bezel 5b is reversibly configurable between the unlocked condition and the locked condition according to rotations of the bezel 5b itself (and consequently, according to the rotation of the pushing elements 5c solidly to the bezel 5b) about the axis of development 3 comprised between 20° and 30° and, for example, according to rotations by 25°: in this way it is possible to achieve a high assembly and interpenetration adjustment speed between two adjacent modular segments 4 with an extremely contained "rotation stroke" and therefore with great ergonomic ease by the operator that assembles the hose 1.

According to a possible but non-limiting embodiment of the invention, the tubular body 2 comprises - and therefore consists of - a predetermined number of modular segments 4 mutually interconnected along said axis of development 3 and includes selective adjustment means of an interpenetration distance between two modular segments 4 adjacent along the axis of development 3 (these structural features therefore, in simultaneous and synergistic terms, result in the so-called "telescopicity" of the hose, that is, its ability to expand or to contract through relative interpenetrations selectable between its modular segments, and its "combinability" or "modularity", i.e. its ability to act with an arbitrary number of modular segments hooked sequentially to each other along the axis of development).

With particular reference to the modularity of the present invention, it can be seen that the modular segments 4 (with the exception of the junction segment, which will be detailed below and still has at least one part or end suitable to structurally and/or geometrically interface with at least one modular segment) are repeated identically among each other along the axis of development 3 and at least one of these modular segments (but preferably all the modular segments 4) defining the hose 1 includes in turn these structural components:
- a head portion 4a suitable to define a preferably partial interpenetration seat with a subsequent modular segment 4 located along the axis of development 3;
- an elongated portion 4b protruding from the head portion 4a along a typically ideal (but not limited to) rectilinear axis contributing to define the axis of development 3 under assembly conditions of the hose 1; and
- a tail portion 4c connected to the elongated portion 4b and opposite to the head portion 4a along the just-mentioned ideal axis - and therefore, along the axis of development 3 under assembly conditions of the hose 1 and suitable to interpenetrate with a head portion 4a of a preceding modular segment located along the axis of development 3.

By explaining in further detail and referring to the accompanying figures, it can be seen that if the body 2 is combinable according to a predetermined number of modular segments 4, the head portion 4a of one or each of these modular segments 4 (and possibly also the tail portion 4c, depending on the current technical requirements) includes selective locking means 5 integrally made in the head portion 4a itself around the axis of development 3 and reversibly configurable between an unlocked condition in which they lie substantially undeformed with respect to the head portion 4a (and wherein they allow movement of a tail portion 4c of a modular segment 4 at least partially interpenetrated in the head portion 4a), and between a locked condition in which they are deformed so as to prevent the aforementioned movements of the tail portion 4c of the same modular segment 4 at least partially interpenetrated into the head portion 4a.

In order to ensure an adequate safety during assembly and even during the "operational" phase (i.e. when the blower/atomizer is producing a flow of material and/or fluid to be pushed through the hose 1) into at least one head portion 4a and/or tail portion 4c, an enlarged-diameter shoulder is provided, designed to prevent the hose 1 from slipping out (or, in the presence of two or more mutually interpenetrated modular segments 4) at least in a direction of travel along the axis of development 3: such shoulder actually operates by generating mechanical interference along a path of travel which is typically a movement (or flow) direction of the first mentioned flow of fluid and/or material (all of which obviously occurs under operating conditions of the hose 1).

The selective determination of the interpenetration (and hence of the resulting overall length of the hose 1) between two adjacent modular segments 4 is also guaranteed by suitable selective determination means of an interpenetration distance 5 between two modular segments 4 (which, as just mentioned above, will have to be at least partially interpenetrated); such selective determination means of an interpenetration distance are cooperatively active with the crown segments 5a and bezel 5b and, in the embodiment illustrated in the appended figures, they comprise a plurality of pairs of circumferential engravings obtained in the elongated portion 4b. Conveniently, the pairs of circumferential engravings described above define a centre line along the axis of development 3, substantially corresponding to a distance defined between the slots between their "free" edges (i.e., the edges defined along the slots 6) and circumferential engravings, making the distance of interpenetration stable: in other words, the geometric coincidence between the centre line of the pairs of circumferential engravings and the slots of the crown portions, when the crown portions undergo "arrow" deformation, allows two modular segments not to axially move with respect to each other when the bezel 5b is rotated, bringing it in the locked condition.

A junction segment 8 is located at one end of the hose 1 connectable to an atomizer and/or blower machinery: such junction segment 8 can be connected to at least one modular segment 4 at its head end 8a and also includes a tail end 8b (opposite to the head end 8a) which allows rotations without crushing or collapse of an inner section of the hose 1 around the axis of development 3.

Conveniently, the just mentioned function is made possible by the following presence and combination of the following structural features:
- deformation engagement means 9, integrally formed (e.g., by means of slots and/or programmed elastic yielding portions) in the tail portion 8b of the junction segment or even in the tail portion 4c of a modular segment 4); and
- at least one clamping collar 10 which can be circumscribed to the deformation engagement means 9 under conditions of connection of the junction segment 8 to the atomizer and/or blower machinery. Nevertheless, an object of the present invention is also a portable atomizer and/or blower machinery, which essentially comprises a support frame 100 suitable to be worn as a "back-pack" or "shoulder-strap" by an operator, a motor assembly 200 connected to the support frame 100 and an outlet junction 300 connected to the motor assembly 200 and suitable to define a fluid and/or material flow: such a portable machinery also comprises at least one directable pivoting hose 1.

Instead, returning to the basic structure of the present invention, and more particularly focusing on the ability of the modular segments 4 to reciprocally interpenetrate and connect, it can be seen in the appended figures the presence of complementary engagement means 11, which in turn include protrusions and/or mutually complementarily shaped cavities and respectively belonging to head portions 4a and/or tail portions 4c of adjacent modular segments: such complementary engagement means 11 can achieve a degree of hooking between two adjacent modular segments so as to maximize the total length of the hose 1 constituted by two or more of these same adjacent modular segments 4.

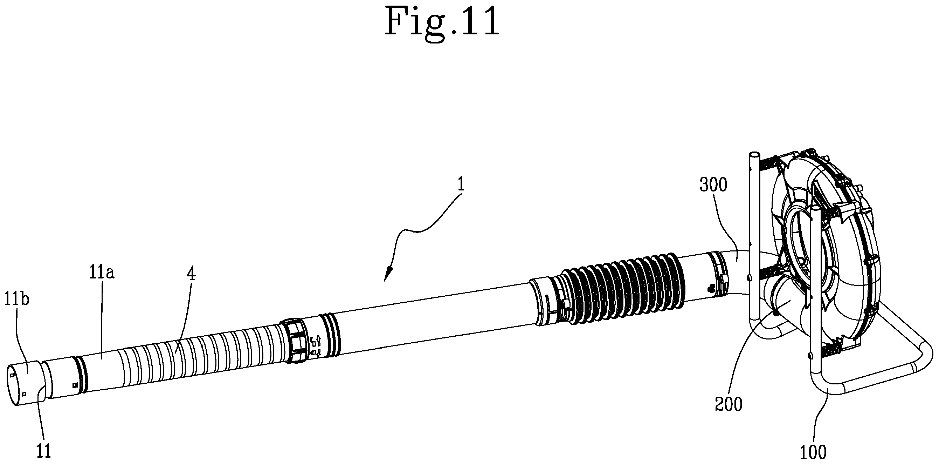

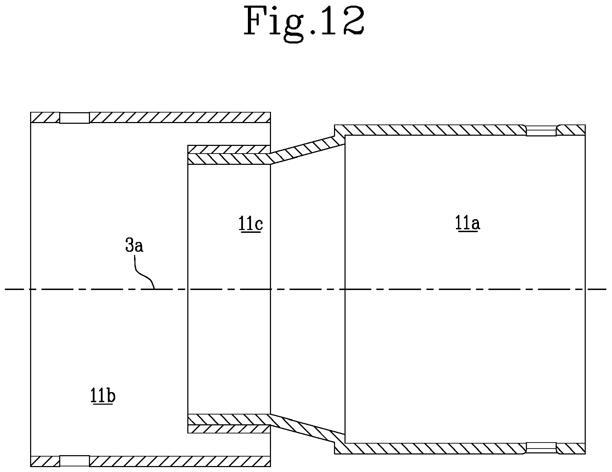

Finally, with reference to Figures 11 and 12 hereinbelow, it is possible to note the technical possibility of providing the directable pivoting hose 1 with a suitable head section 11 in order to optimize the performance in terms of flow or aspiration: such head segment 11 can be positioned (for example, removable) on a modular segment 4 at one opposite end, along the axis 3a of the hose 1, to the junction segment 8, and is conveniently characterized by having an axial variation of the flow section suitable to determine a venturi effect.

Focusing on the structural details of the head segment (see Figure 12 in particular), it is possible to notice the following components:
- a hooking portion 11a suitable to engage on a modular segment 4 and defining a first sectional radius on an ideal plane normal to the axis of development 3a;
- a mouth portion 11b axially engaged on the aforementioned hooking portion 11a and having a second sectional radius on an ideal plane normal to the axis of development 3a equal to or greater than the first sectional radius; as well as
- a clamping portion 11c interposed between the hooking portion 11a and the mouth portion 11b, and defining a third sectional radius on an ideal plane normal to the axis of development 3a shorter than the first and/or the second sectional radius.

The just-described invention allows to obtain several advantages over the known art.

First, the peculiar structural architecture described above allows to determine, fully according to the atomizer/blower operator's will, and in full compliance with the current requirements, hoses having variable lengths and which may also reach remarkable sizes (e.g. where high or distant areas must be reached): the length variability and the possibility of integrating an arbitrary number of modular segments into a single hose structure is not to the detriment of the structural consistency and also the possibility of fine-tuning the length by means of the operating interpenetration means between two adjacent modular segments.

However, it should be noted that this construction simultaneously provides telescopicity, modularity and correct structural strength together with an optimum degree of pneumatic efficiency (or, in other words, a substantial absence of unwanted flow patterns between a modular segment and the other) and at a greatly advantageous manufacturing cost in terms of economies of scale.

## Claims

1. Directable pivoting hose for portable atomizer and/or blower machinery, the hose (1) comprising a body (2) having a first end able to hook a fluid and/or material flow and propulsion and/or injection apparatus, and a second end opposite to said first end along an axis of development (3) of the hose (1) itself and able to expel said fluid and/or material flow, said body (2) comprising, along said axis of development (3):
- a head portion (4a) able to define a first interpenetration seat arranged along the axis of development (3);
- an elongated portion (4b) protruding from said head portion 4a along an ideal, preferably rectilinear axis, contributing to define the axis of development (3) under assembly conditions of the hose (1);
- a tail portion (4c) connected to said elongated portion (4b) and opposite to the head portion (4a) along said ideal axis and suitable to define a second interpenetration seat; and
- selective locking means (5) integrally obtained at least in the head portion (4a) itself around the axis of development (3) and reversibly configurable between an unlocked condition, in which they lie substantially undeformed with respect to the head portion (4a) and in which they allow approaching or distancing movements of components that can be hooked to the head portion (4a) at least at said first interpenetration seat and between a locked condition in which they are deformed so as to bind said hookable components in said first interpenetration seat,
**characterized in that** said selective locking means (5) further comprise a predetermined number of crown segments (5a) defined by two slots (6) integrally made in the head portion (4a) along ideal sectional planes normal to the axis of development (3) and also defined by two integral connection areas (7) lying on the head portion (4a) and perimetrally alternated with respect to said two slots (6), said crown segments (5a) being suitable to assume a predetermined curvature arrow projected internally to the head portion (4a) at said locked condition.

2. Hose according to claim 1, wherein said crown segments (5a) are radially equally spaced on the head portion (4a) with respect to the axis of development (3).

3. Hose according to claim 2, wherein said crown segments (5a) have a variable thickness, in a radial direction with respect to the axis of development (3), said variable thickness being preferably monotonously variable from an integral connection area (7) towards the other integral connection area (7).

4. Hose according to any one of the preceding claims, wherein the selective locking means (5) further comprise at least one bezel (5b) circumscribed to the head portion (4a), said bezel (5b) being preferably circumscribed to one or more of said crown segments (5a), said bezel (5b) being able to impose on the crown segments (5a) said predetermined curvature arrow projected internally to the head portion (4a) at said locked condition.

5. Hose according to claim 4, wherein the bezel (5b) comprises one or more pushing elements (5c) projecting towards the crown segments (5a) and reversibly configurable by rotation of the bezel (5b) around the head portion (4a) between said unlocked condition in which they do not act by deforming the crown segments (5a) and said locked condition, in which they act by deformation of the crown segments (5a).

6. Hose according to claim 5, in which the bezel (5b) is reversibly solidly configurable between said unlocked condition and said locked configuration according to rotations of the bezel (5b) and/or of said pushing elements (5c) to the bezel (5b) around the axis of development (3) comprised between 20° and 30°, preferably according to rotations of 25°.

7. Hose according to any one of the preceding claims, wherein the body (2) is combinable through a predetermined number of modular segments (4), at least one and preferably each of said modular segments (4) comprising:
- a head portion (4a) suitable to define a preferably partial interpenetration seat with a subsequent modular segment (4) located along the axis of development (3);
- an elongated portion (4b) protruding from said head portion 4a along an ideal, preferably rectilinear axis, contributing to define the axis of development (3) under assembly conditions of the hose (1); and
- a tail portion (4c) connected to said elongated portion (4b) and opposite to the head portion (4a) along said ideal axis and suitable to interpenetrate with a head portion (4a) of a preceding modular segment located along the axis of development (3),
said selective locking means (5) being integrally obtained at least in the same head portion (4a) about the axis of development (3) and being reversibly configurable between an unlocked condition in which they lie substantially undeformed with respect to the head portion (4a) and in which they allow movement of a tail portion (4c) of a modular segment (4) which is at least partially interpenetrated into the head portion (4a), and between a locked condition in which they are deformed to prevent said movements of the tail portion (4c) of said modular segment (4) at least partially interpenetrated into the head portion (4a).

8. Hose according to claim 7, wherein said modular segments (4) are identically repeated among each other along the axis of development (3).

9. Hose according to claims 7 or 8, wherein said combinable body (2) comprises a predetermined number of modular segments (4) mutually interconnected along said axis of development (3), and wherein there are also selective adjustment means of a relative interpenetration distance between two modular segments (4) adjacent along the axis of development (3).

10. Hose according to any one of the preceding claims, wherein at least one tail portion (4c) comprises an enlarged-diameter shoulder, suitable to prevent the body (2) from slipping out and/or two modular segments (4) defining a combinable body (2) mutually interpenetrated at least according to a travel direction along the axis of development (3), said travel direction being preferably a movement direction of said fluid and/or material flow under operating conditions of the hose (1).

11. Hose according to any one of the preceding claims from 7 to 10, wherein there are also selective determination means of an interpenetration distance (5) between two modular segments (4) which are at least partially interpenetrated, said selective determination means of an interpenetration distance being cooperatively active with the crown segments (5a) and the bezel (5b).

12. Hose according to claim 11, wherein the selective determination means of an interpenetration distance (5) comprise a plurality of circumferential engraving pairs formed in said elongated portion (4b) and defining a centre line along the axis of development (3), substantially corresponding to a distance defined between the slots (6) defining the crown segments (5a).

13. Hose according to any one of the preceding claims from 7 to 12, wherein it is also provided a junction segment (8) preferably disposed at one end of the directable pivoting hose (1) connectable to an atomizer and/or blower machinery, said junction segment (8) being connectable to at least one modular segment (4) to its head end (8a) and further comprising a tail end (8b) opposite to said head end (8a), said tail end (8b) allowing rotations without crushing or collapse of an inner section of the hose (1) around the axis of development (3) and comprising:
- deformation engagement means (9) integrally obtained, preferably by means of slots and/or programmed elastic yielding portions, in the tail portion (8b); and
- at least one clamping collar (10) which can be circumscribed to said deformation engagement means (9) under conditions of connection of said junction segment (8) to the atomizer and/or blower machinery.

14. Hose according to any one of the preceding claims from 7 to 13, wherein it is also provided a head segment (11) which can be placed, preferably removably, on a modular segment (4) at an end along the axis of development (3a) of the hose (1) opposite to the junction segment (8), said head segment (11) having an axial variation of a flow section suitable to determine a Venturi effect and comprising even more preferably:
- a hooking portion (11a) suitable to engage on said modular segment (4) and defining a first sectional radius on an ideal plane normal to the axis of development (3a);
- a mouth portion (11b) axially engaged on said hooking portion (11a) and having a second sectional radius on an ideal plane normal to the axis of development (3a) equal to or greater than said first sectional radius; and
- a clamping portion (11c) interposed between the hooking portion (11a) and said mouth portion (11b), and defining a third sectional radius on an ideal plane normal to the axis of development (3a) shorter than said first and/or said second sectional radius.

15. Portable atomizer and/or blower machinery, comprising a support frame (100) suitable to be worn as a "back-pack" or "shoulder-strap" by an operator, a motor assembly (200) connected to said support frame (100) and an outlet junction (300) connected to said motor assembly (200) and suitable to define a fluid and/or material flow, **characterized in that** it further comprises at least one directable pivoting hose (1) according to any one of the preceding claims, said directable pivoting hose (1) being connected at least to said outlet junction (300).

## Patentansprüche

1. Ausrichtbarer, schwenkbarer Schlauch für tragbare Zerstäuber- und/oder Gebläsemaschinen, wobei der Schlauch (1) einen Körper (2) umfasst, der ein erstes Ende aufweist, das in der Lage ist, eine Vorrichtung für den Medium- und/oder Materialstrom und den Vortrieb und/oder die Injektion anzuhaken, und ein zweites Ende, das gegenständig zum ersten Ende entlang einer Entwicklungsachse (3) des Schlauchs (1) angeordnet und in der Lage ist, den Medium- und/oder Materialstrom auszustoßen, wobei der Körper (2) entlang der Entwicklungsachse (3) Folgendes umfasst:
- einen stirnseitigen Abschnitt (4a), der in der Lage ist, einen ersten Durchdringungssitz zu definieren, der entlang der Entwicklungsachse (3) angeordnet ist;
- einen verlängerten Abschnitt (4b), der aus dem stirnseitigen Abschnitt (4a) entlang einer idealen, vorzugsweise geradlinigen Achse hervorsteht, dazu beitragend, die Entwicklungsachse (3) unter Montagebedingungen des Schlauchs (1) zu definieren;
- einen endseitigen Abschnitt (4c), der mit dem verlängerten Abschnitt (4b) verbunden und gegenständig zum stirnseitigen Abschnitt (4a) entlang der idealen Achse angeordnet und geeignet ist, um einen zweiten Durchdringungssitz zu definieren, und
- selektive Verriegelungsmittel (5), die in einem Stück mindestens im stirnseitigen Abschnitt (4a) rund um die Entwicklungsachse (3) ausgebildet und reversierbar zwischen einem entriegelten Zustand, in dem sie im Wesentlichen nicht verformt bezüglich des stirnseitigen Abschnitts (4a) liegen und in dem sie Annäherungs- oder Entfernungsbewegungen der Komponenten erlauben, die an den stirnseitigen Abschnitt (4a) angehakt werden können, zumindest am ersten Durchdringungssitz, und zwischen einem verriegelten Zustand konfigurierbar sind, in dem sie verformt sind, sodass sie die anhakbaren Komponenten im Durchdringungssitz festspannen,
**dadurch gekennzeichnet, dass** die selektiven Verriegelungsmittel (5) zudem eine vorgegebene Anzahl an Kranzsegmenten (5a) umfassen, definiert durch zwei Aussparungen (6), die in einem Stück im stirnseitigen Abschnitt (4a) entlang idealer Schnittebenen lotrecht zur Entwicklungsachse (3) ausgebildet sind, und auch definiert durch zwei integrale Verbindungsbereiche (7), die auf dem stirnseitigen Abschnitt (4a) liegen und umfangsseitig gegenüber den zwei Aussparungen (6) abgewechselt sind, wobei die Kranzsegmente (5a) geeignet sind, um eine Krümmungsdurchbiegung einzunehmen, die innenseitig am verriegelten Zustand zum stirnseitigen Abschnitt (4a) hervorsteht.

2. Schlauch nach Anspruch 1, wobei die Kranzsegmente (5a) auf dem stirnseitigen Abschnitt (4a) bezüglich der Entwicklungsachse (3) radial gleich beabstandet sind.

3. Schlauch nach Anspruch 2, wobei die Kranzsegmente (5a) eine variable Dicke in einer radialen Richtung bezüglich der Entwicklungsachse (3) aufweisen, wobei die variable Dicke vorzugsweise monoton variabel von einem integralen Verbindungsbereich (7) hinführend zum anderen integralen Verbindungsbereich (7) ist.

4. Schlauch nach einem der vorhergehenden Ansprüche, wobei die selektiven Verriegelungsmittel (5) zudem mindestens eine Einfassung (5b) umfassen, beschränkt auf den stirnseitigen Abschnitt (4a), wobei die Einfassung (5b) vorzugsweise auf eins oder mehrere der Kranzsegmente (5a) beschränkt ist, wobei die Einfassung (5b) in der Lage ist, den Kranzsegmenten (5a) die vorgegebene Krümmungsdurchbiegung, die innenseitig zum stirnseitigen Abschnitt (4a) am verriegelten Zustand hervorsteht, aufzuzwingen.

5. Schlauch nach Anspruch 4, wobei die Einfassung (5b) ein oder mehrere Schubelemente (5c) umfasst, die hinführend zu den Kranzsegmenten (5a) hervorstehen und reversierbar durch die Drehung der Einfassung (5b) rund um den stirnseitigen Abschnitt (4a) zwischen dem entriegelten Zustand, in dem sie nicht wirken, indem sie die Kranzsegmente (5a) verformen, und dem verriegelten Zustand, in dem sie wirken, indem sie die Kranzelemente (5a) verformen, konfigurierbar sind.

6. Schlauch nach Anspruch 5, wobei die Einfassung (5b) reversierbar fest konfigurierbar zwischen dem entriegelten Zustand und der verriegelten Auslegung gemäß Drehungen der Einfassung (5b) und/oder der Schubelemente (5c) zur Einfassung (5b) rund um die Entwicklungsachse (3) zwischen 20° und 30°, vorzugsweise gemäß Drehungen von 25°, ist.

7. Schlauch nach einem der vorhergehenden Ansprüche, wobei der Körper (2) durch eine vorgegebene Anzahl an modularen Segmenten (4) kombinierbar ist, wobei mindestens eins und vorzugsweise alle dieser modularen Segmente (4) Folgendes umfassen:
- einen stirnseitigen Abschnitt (4a), der geeignet ist, einen vorzugsweise teilweisen Durchdringungssitz mit dem nachfolgenden modularen Segment (4), das sich entlang der Entwicklungsachse (3) befindet, zu definieren;
- einen verlängerten Abschnitt (4b), der aus dem stirnseitigen Abschnitt (4a) entlang einer idealen, vorzugsweise geradlinigen Achse hervorsteht, dazu beitragend, die Entwicklungsachse (3) unter Montagebedingungen des Schlauchs (1) zu definieren, und
- einen endseitigen Abschnitt (4c), der mit dem verlängerten Abschnitt (4b) verbunden und gegenständig zum stirnseitigen Abschnitt (4a) entlang der idealen Achse angeordnet und geeignet ist, um einen stirnseitigen Abschnitt (4a) eines vorhergehenden modularen Segments, das sich entlang der Entwicklungsachse (3) befindet, völlig zu durchdringen, wobei die selektiven Verriegelungsmittel (5) in einem Stück mindestens im selben stirnseitigen Abschnitt (4a) um die Entwicklungsachse (3) ausgebildet und reversierbar zwischen einem entriegelten Zustand, in dem sie im Wesentlichen nicht verformt bezüglich des stirnseitigen Abschnitts (4a) liegen und in dem sie die Bewegung des endseitigen Abschnitts (4c) eines modularen Segments (4) erlauben, das den stirnseitigen Abschnitt (4a) mindestens teilweise völlig durchdringt, und zwischen einem verriegelten Zustand konfigurierbar sind, in dem sie verformt sind, um die Bewegungen des endseitigen Abschnitts (4c) des modularen Segments (4a), das den stirnseitigen Abschnitt (4a) mindestens teilweise völlig durchdringt, zu verhindern.

8. Schlauch nach Anspruch 7, wobei die modularen Segmente (4) entlang der Entwicklungsachse (3) identisch untereinander wiederholt sind.

9. Schlauch nach Anspruch 7 oder 8, wobei der kombinierbare Körper (2) eine vorgegebene Anzahl an modularen Segmenten (4) umfasst, die gegenseitig entlang der Entwicklungsachse (3) miteinander verbunden sind, und wobei auch selektive Justiermittel eines relativen Durchdringungsabstands zwischen zwei modularen Segmenten (4), die entlang der Entwicklungsachse (3) aneinandergrenzen, bereitgestellt sind.

10. Schlauch nach einem der vorhergehenden Ansprüche, wobei mindestens ein endseitiger Abschnitt (4c) eine Schulter mit einem vergrößerten Durchmesser umfasst, die geeignet ist, um zu verhindern, dass der Körper (2) herausrutscht, und/oder zwei modulare Segmente (4), die einen kombinierbaren Körper (2) definieren, die sich gegenseitig mindestens nach einer Hubrichtung entlang der Entwicklungsachse (3) durchdringen, wobei es sich bei der Hubrichtung vorzugsweise um eine Bewegungsrichtung des Medium- und/oder Materialstroms unter Betriebsbedingungen des Schlauchs (1) handelt.

11. Schlauch nach einem der vorhergehenden Ansprüche 7 bis 10, wobei auch selektive Ermittlungsmittel eines Durchdringungsabstands (5) zwischen zwei modularen Segmenten (4) bereitgestellt sind, die mindestens teilweise durchdrungen sind, wobei die selektiven Ermittlungsmittel eines Durchdringungsabstands kooperativ mit den Kranzsegmenten (5a) und der Einfassung (5b) aktiv sind.

12. Schlauch nach Anspruch 11, wobei die selektiven Ermittlungsmittel eines Durchdringungsabstands (5) eine Vielzahl von umfangsseitigen Einkerbungspaaren umfassen, die im verlängerten Abschnitt (4b) ausgeformt sind und eine Mittellinie entlang der Entwicklungsachse (3) definieren, die im Wesentlichen einem Abstand entspricht, der zwischen den Aussparungen (6) definiert ist, die die Kranzsegmente (5a) definieren.

13. Schlauch nach einem der vorhergehenden Ansprüche 7 bis 12, wobei auch ein Zusammenfügungssegment (8) bereitgestellt ist, das vorzugsweise an einem Ende des ausrichtbaren, schwenkbaren Schlauchs (1) angeordnet ist und mit einer Zerstäuber- und/oder Gebläsemaschine verbindbar ist, wobei das Zusammenfügungssegment (8) mit mindestens einem modularen Segment (4) an dessen stirnseitigem Ende (8a) verbindbar ist und zudem ein endseitiges Ende (8b) umfasst, das dem stirnseitigen Ende (8a) entgegengesetzt ist, wobei das endseitige Ende (8b) Drehungen erlaubt, ohne dass eine innere Sektion des Schlauchs (1) zerdrückt wird oder zusammenbricht, rund um die Entwicklungsachse (3), und umfassend:
- Verformungseingriffsmittel (9), die in einem Stück im endseitigen Abschnitt (8b) ausgebildet sind, vorzugsweise durch Aussparungen und/oder programmierte elastische nachgebende Abschnitte, und
- mindestens eine Klemmschelle (10), die auf die Verformungseingriffsmittel (9) unter Verbindungsbedingungen des Zusammenfügungssegments (8) mit der Zerstäuber- und/oder Gebläsemaschine beschränkt sein kann.

14. Schlauch nach einem der vorhergehenden Ansprüche 7 bis 13, wobei auch ein stirnseitiges Segment (11) bereitgestellt ist, das vorzugsweise entfernbar auf einem modularen Segment (4) an einem Ende entlang der Entwicklungsachse (3a) des Schlauchs (1) gegenständig zum Zusammenfügungssegment (8) platziert sein kann, wobei das stirnseitige Segment (11) eine axiale Variation eines Strömungsabschnitts aufweist, die geeignet ist, um einen Venturi-Effekt zu bewirken, und umfassend noch besser Folgendes:
- einen Hakenabschnitt (11a), der geeignet ist, um auf dem modularen Segment (4) in Eingriff zu gelangen, definierend einen ersten Schnittradius auf einer idealen Ebene, lotrecht zur Entwicklungsachse (3a);
- einen Mündungsabschnitt (11b), der axial auf dem Hakenabschnitt (11a) im Eingriff ist und einen zweiten Schnittradius auf einer idealen Ebene lotrecht zur Entwicklungsachse (3a) größer oder gleich dem ersten Schnittradius aufweist, und
- einen Klemmabschnitt (11c), der zwischen dem Hakenabschnitt (11a) und dem Mündungsabschnitt (11b) eingesetzt ist und einen dritten Schnittradius auf einer idealen Ebene lotrecht zur Entwicklungsachse (3a) definiert, der kürzer als der erste und/oder der zweite Schnittradius ist.

15. Tragbare Zerstäuber- und/oder Gebläsemaschine, umfassend einen Tragerahmen (100), geeignet, um als "Rucksack" oder "über die Schulter" von einem Bediener getragen zu werden, eine Motoranordnung (200), die mit dem Tragerahmen (100) verbunden ist, und eine Auslasszusammenfügung (300), die mit der Motoranordnung (200) verbunden und geeignet ist, um einen Medium- und/oder Materialstrom zu definieren, **dadurch gekennzeichnet, dass** sie zudem mindestens einen ausrichtbaren, schwenkbaren Schlauch (1) nach einem der vorhergehenden Ansprüche umfasst, wobei der ausrichtbare, schwenkbare Schlauch (1) zumindest mit der Auslasszusammenfügung (300) verbunden ist.

## Revendications

1. Tuyau flexible orientable pivotant pour équipement portable atomiseur et/ou souffleur, le tuyau flexible (1) comprenant un corps (2) ayant une première extrémité capable d'accrocher un écoulement de fluide et/ou de matière et un appareil de propulsion et/ou d'injection, et une seconde extrémité opposée à ladite première extrémité le long d'un axe de développement (3) du tuyau flexible (1) lui-même et capable d'expulser ledit écoulement de fluide et/ou de matière, ledit corps (2) comprenant, le long dudit axe de développement (3) :
- une portion de tête (4a) capable de définir un premier siège d'interpénétration disposé le long de l'axe de développement (3) ;
- une portion allongée (4b) faisant saillie de ladite portion de tête 4a le long d'un axe idéal, de préférence rectiligne, contribuant à définir l'axe de développement (3) dans des conditions d'assemblage du tuyau flexible (1) ;
- une portion de queue (4c) reliée à ladite portion allongée (4b) et opposée à la portion de tête (4a) le long dudit axe idéal et appropriée pour définir un second siège d'interpénétration ; et
- des moyens de verrouillage sélectif (5) obtenus intégralement au moins dans la portion de tête (4a) elle-même autour de l'axe de développement (3) et configurables de manière réversible entre une condition non verrouillée, dans laquelle ils se trouvent sensiblement non déformés par rapport à la portion de tête (4a) et dans laquelle ils permettent des mouvements d'approche ou d'éloignement de composants qui peuvent être accrochés à la portion de tête (4a) au moins au niveau dudit premier siège d'interpénétration et entre une condition verrouillée dans laquelle ils sont déformés de manière à lier lesdits composants accrochables dans ledit premier siège d'interpénétration,
**caractérisé en ce que** lesdits moyens de verrouillage sélectif (5) comprennent en outre un nombre prédéterminé de segments de couronne (5a) définis par deux fentes (6) réalisées intégralement dans la portion de tête (4a) le long de plans de section idéaux perpendiculaires à l'axe de développement (3) et également définis par deux zones de connexion intégrales (7) se trouvant sur la portion de tête (4a) et alternées de manière périmétrique par rapport auxdites deux fentes (6), lesdits segments de couronne (5a) étant appropriés pour prendre une flèche de courbure prédéterminée projetée à l'intérieur de la portion de tête (4a) dans ledit état verrouillé.

2. Tuyau flexible selon la revendication 1, dans lequel lesdits segments de couronne (5a) sont radialement espacés de manière égale sur la portion de tête (4a) par rapport à l'axe de développement (3).

3. Tuyau flexible selon la revendication 2, dans lequel lesdits segments de couronne (5a) ont une épaisseur variable, dans une direction radiale par rapport à l'axe de développement (3), ladite épaisseur variable étant de préférence variable de façon monotone depuis une zone de connexion intégrale (7) vers l'autre zone de connexion intégrale (7).

4. Tuyau flexible selon l'une quelconque des revendications précédentes, dans lequel les moyens de verrouillage sélectif (5) comprennent en outre au moins cadran (5b) circonscrit à la portion de tête (4a), ledit cadran (5b) étant de préférence circonscrit à un ou plusieurs desdits segments de couronne (5a), ledit cadran (5b) étant capable d'imposer aux segments de couronne (5a) ladite flèche de courbure prédéterminée projetée à l'intérieur de la portion de tête (4a) dans ladite condition verrouillée.

5. Tuyau flexible selon la revendication 4, dans lequel le cadran (5b) comprend un ou plusieurs éléments de poussée (5c) faisant saillie vers les segments de couronne (5a) et configurables de manière réversible par rotation du cadran (5b) autour de la portion de tête (4a) entre ladite condition déverrouillée, dans laquelle ils n'agissent pas en déformant les segments de couronne, (5a) et ladite condition verrouillée, dans laquelle ils agissent en déformant les segments de couronne (5a).

6. Tuyau flexible selon la revendication 5, dans lequel le cadran (5b) est configurable de manière réversible et solide entre ladite condition déverrouillée et ladite configuration verrouillée selon des rotations du cadran (5b) et/ou desdits éléments de poussée (5c) vers le cadran (5b) autour de l'axe de développement (3) compris entre 20° et 30°, de préférence selon des rotations de 25°.

7. Tuyau flexible selon l'une quelconque des revendications précédentes, dans lequel le corps (2) peut être combiné à travers un nombre prédéterminé de segments modulaires (4), au moins l'un et de préférence chacun desdits segments modulaires (4) comprenant :
- une portion de tête (4a) apte à définir un siège d'interpénétration, de préférence partiel, avec un segment modulaire ultérieur (4) situé le long de l'axe de développement (3) ;
- une portion allongée (4b) faisant saillie de ladite portion de tête 4a le long d'un axe idéal, de préférence rectiligne, contribuant à définir l'axe de développement (3) dans des conditions d'assemblage du tuyau flexible (1) ; et
- une portion de queue (4c) reliée à ladite portion allongée (4b) et opposée à la portion de tête (4a) le long dudit axe idéal et apte à s'interpénétrer avec une portion de tête (4a) d'un segment modulaire précédent situé le long de l'axe de développement (3),
lesdits moyens de verrouillage sélectif (5) étant intégralement obtenus au moins dans la même portion de tête (4a) autour de l'axe de développement (3) et étant configurables de manière réversible entre une condition déverrouillée dans laquelle ils se trouvent sensiblement non déformés par rapport à la portion de tête (4a) et dans laquelle ils permettent le mouvement d'une portion de queue (4c) d'un segment modulaire (4) qui est au moins partiellement interpénétré dans la portion de tête (4a), et entre une condition verrouillée dans laquelle ils sont déformés pour empêcher lesdits mouvements de la portion de queue (4c) dudit segment modulaire (4) au moins partiellement interpénétré dans la portion de tête (4a) .

8. Tuyau flexible selon la revendication 7, dans lequel lesdits segments modulaires (4) sont répétés de manière identique les uns aux autres le long de l'axe de développement (3).

9. Tuyau flexible selon les revendications 7 ou 8, dans lequel ledit corps combinable (2) comprend un nombre prédéterminé de segments modulaires (4) mutuellement interconnectés le long dudit axe de développement (3), et dans lequel il existe également des moyens de réglage sélectif d'une distance d'interpénétration relative entre deux segments modulaires (4) adjacents le long de l'axe de développement (3).

10. Tuyau flexible selon l'une quelconque des revendications précédentes, dans lequel au moins une portion de queue (4c) comprend un épaulement de diamètre agrandi, approprié pour empêcher le corps (2) de glisser et/ou deux segments modulaires (4) définissant un corps combinable (2) mutuellement interpénétré au moins selon une direction de déplacement le long de l'axe de développement (3), ladite direction de déplacement étant de préférence une direction de mouvement dudit écoulement de fluide et/ou de matière dans des conditions de fonctionnement du tuyau flexible (1).

11. Tuyau flexible selon l'une quelconque des revendications précédentes de 7 à 10, dans lequel il existe également des moyens de détermination sélective d'une distance d'interpénétration (5) entre deux segments modulaires (4) qui sont au moins partiellement interpénétrés, lesdits moyens de détermination sélective d'une distance d'interpénétration étant actifs en coopération avec les segments de couronne (5a) et le cadran (5b).

12. Tuyau flexible selon la revendication 11, dans lequel les moyens de détermination sélective d'une distance d'interpénétration (5) comprennent une pluralité de paires de gravures circonférentielles formées dans ladite portion allongée (4b) et définissant une ligne centrale le long de l'axe de développement (3), correspondant sensiblement à une distance définie entre les fentes (6) définissant les segments de couronne (5a) .

13. Tuyau flexible selon l'une quelconque des revendications précédentes de 7 à 12, dans lequel il est également prévu un segment de jonction (8) disposé de préférence à une extrémité du tuyau flexible orientable pivotant (1) pouvant être connecté à un équipement atomiseur et/ou souffleur, ledit segment de jonction (8) étant connectable à au moins un segment modulaire (4) à son extrémité de tête (8a) et comprenant en outre une extrémité de queue (8b) opposée à ladite extrémité de tête (8a), ladite extrémité de queue (8b) permettant des rotations sans écrasement ou effondrement d'une section interne du tuyau flexible (1) autour de l'axe de développement (3) et comprenant :
- des moyens d'engagement par déformation (9) intégralement obtenus, de préférence au moyen de fentes et/ou de portions à fléchissement élastique programmées, dans la portion de queue (8b) ; et
- au moins un collier de serrage (10) qui peut être circonscrit auxdits moyens d'engagement de déformation (9) dans des conditions de connexion dudit segment de jonction (8) à l'équipement atomiseur et/ou souffleur.

14. Tuyau flexible selon l'une quelconque des revendications précédentes de 7 à 13, dans lequel il est également prévu un segment de tête (11) qui peut être placé, de préférence de manière amovible, sur un segment modulaire (4) à une extrémité le long de l'axe de développement (3a) du tuyau flexible (1) opposée au segment de jonction (8), ledit segment de tête (11) ayant une variation axiale d'une section d'écoulement appropriée pour déterminer un effet Venturi et comprenant encore plus préférentiellement :
- une portion d'accrochage (11a) appropriée pour s'engager sur ledit segment modulaire (4) et définissant un premier rayon de section sur un plan idéal perpendiculaire à l'axe de développement (3a) ;
- une portion d'embouchure (11b) engagée axialement sur ladite portion d'accrochage (11a) et ayant un second rayon de section sur un plan idéal perpendiculaire à l'axe de développement (3a) égal ou supérieur audit premier rayon de section ; et
- une portion de serrage (11c) interposée entre la portion d'accrochage (11a) et ladite portion d'embouchure (11b), et définissant un troisième rayon de section sur un plan idéal perpendiculaire à l'axe de développement (3a) plus court que ledit premier et/ou ledit deuxième rayon de section.

15. Équipement portable atomiseur et/ou souffleur, comprenant un cadre de support (100) adapté pour être porté comme un « sac à dos » ou une « bandoulière » par un opérateur, un ensemble moteur (200) relié audit cadre de support (100) et une jonction de sortie (300) reliée audit ensemble moteur (200) et adaptée pour définir un écoulement de fluide et/ou de matière, **caractérisé en ce qu'**il comprend en outre au moins un tuyau flexible orientable pivotant (1) selon l'une quelconque des revendications précédentes, ledit tuyau flexible orientable pivotant (1) étant relié au moins à ladite jonction de sortie (300).
